(19) **Europäisches Patentamt / European Patent Office / Office européen des brevets**

(11) **EP 2 070 338 B1**

(12) **FASCICULE DE BREVET EUROPEEN**

(45) Date de publication et mention
de la délivrance du brevet:
**12.09.2012 Bulletin 2012/37**

(21) Numéro de dépôt: **07858508.0**

(22) Date de dépôt: **04.10.2007**

(51) Int Cl.:
*H04N 13/04* *(2006.01)* *H04N 13/00* *(2006.01)*

(86) Numéro de dépôt international:
**PCT/FR2007/052077**

(87) Numéro de publication internationale:
**WO 2008/040918 (10.04.2008 Gazette 2008/15)**

(54) **DISPOSITIF D'AFFICHAGE POUR LA VISUALISATION STÉRÉOSCOPIQUE**

ANZEIGEVORRICHTUNG ZUR STEREOSKOPISCHEN ANZEIGE

DISPLAY DEVICE FOR STEREOSCOPIC DISPLAY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **05.10.2006 FR 0654111**

(43) Date de publication de la demande:
**17.06.2009 Bulletin 2009/25**

(73) Titulaire: **ESSILOR INTERNATIONAL (Compagnie Générale d'Optique) 94227 Charenton Le Pont (FR)**

(72) Inventeurs:
• **BUCHON, Cédric F-94227 Charenton Le Pont (FR)**
• **ROUSSEAU, Benjamin F-94227 Charenton Le Pont (FR)**
• **MARIE, Sarah F-94227 Charenton Le Pont (FR)**
• **MOLITON, Renaud décédé (FR)**

(74) Mandataire: **Peguet, Wilfried et al Feray Lenne Conseil Le Centralis 63, avenue du Général Leclerc 92340 Bourg-la-Reine (FR)**

(56) Documents cités:
**EP-A- 1 662 809 US-A- 5 936 663**
**US-A1- 2006 072 206 US-B1- 6 201 517**

**Description**

La présente invention concerne un dispositif d'affichage pour la visualisation stéréoscopique en trois dimensions (3D).

Elle s'applique typiquement, mais non exclusivement, à la visualisation en 3D d'informations de type images ou multimédia.

Le document US-A-20060072206 divulgue un dispositif d'affichage permettant de fournir un mécanisme d'ajustement automatique de la distance interpupillaire d'un porteur en permettant d'afficher une image parallaxe en conformité avec la distance interpupillaire du porteur.

Le dispositif d'affichage comprend un système binoculaire de visualisation avec une première et une deuxième unité optique, un contenu informatif et une source d'affichage, la distance interpupillaire étant un paramètre d'entrée du système binoculaire et du contenu informatif.

Le document WO-A-2004/097462 propose un système binoculaire d'affichage d'informations comprenant un support destiné à être posé sur le nez et supportant un élément d'affichage droit et un élément d'affichage gauche destinés chacun à être placé devant un oeil et comportant chacun un guide optique propageant un faisceau de rayons lumineux émis par un dispositif de génération de faisceaux vers une face d'entrée, jusqu'à une face de sortie où le faisceau est dirigé vers 'oeil correspondant.

Le système binoculaire d'affichage comprend également un agencement de réglage de l'écart pupillaire assurant le déplacement relatif des guides optiques et du support, afin de régler la distance entre ces guides optiques.

Dans une variante, le système binoculaire comprend un sous-système de réglage de la focalisation des images droite et gauche, permettant de modifier indépendamment l'une de l'autre les distances d'affichage des images droite et gauche.

Le système binoculaire d'affichage est en communication avec une source d'affichage simple et avec une interface de contrôle.

La source d'affichage est par exemple une télévision, un lecteur de DVD, un lecteur MPEG 4 ou toute autre source d'images vidéo.

Un signal vidéo est généré par la source de données informatives jusqu'à l'interface de contrôle.

L'interface de contrôle permet à l'utilisateur d'ajuster le contraste ou la luminosité de l'image.

Cependant, ce type de dispositif d'affichage présente toutefois l'inconvénient de ne pas être optimisé pour l'utilisateur dudit dispositif d'affichage et peut rapidement engendrer des malaises et des nausées pour l'utilisateur.

Ce type de dispositif est généralement utilisé avec un effet de relief suraccentué au détriment du confort visuel pour le porteur d'un tel dispositif.

Aussi le problème technique à résoudre, par l'objet de la présente invention, est de proposer un dispositif d'affichage pour la visualisation stéréoscopique comprenant un système binoculaire de visualisation, un contenu informatif et une source d'affichage permettant d'éviter les problèmes de l'état de la technique en offrant notamment une visualisation d'un contenu informatif en 3D limitant la fatigue visuelle et l'inconfort pour l'utilisateur, ou en d'autres termes le porteur, dudit dispositif.

La solution du problème technique posé consiste, selon la présente invention, en ce que le dispositif d'affichage comprend en outre des composants électroniques pour la mise en oeuvre de logiciels d'optimisation du système binoculaire de visualisation, du contenu informatif et de la source d'affichage, lesdits logiciels d'optimisation formant ensemble une boucle de gestion des paramètres suivants :

- la distance interpupillaire d'un porteur, qui est un paramètre d'entrée des logiciels d'optimisation du système binoculaire de visualisation et du contenu informatif,
- la distance d'affichage des images, qui est un paramètre de sortie du logiciel d'optimisation du système binoculaire de visualisation et qui est un paramètre d'entrée du logiciel d'optimisation du contenu informatif ledit paramètre et la distance interpupillaire étant traités par le logiciel d'optimisation du système binoculaire de manière à garantir une parallaxe horizontale inférieure à 1,5° en valeur absolue,
- le contenu informatif virtuel le contenu informatif filmé ou réel acquis en stéréoscopie le contenu informatif filmé ou réel non stéréoscopique la carte de disparité des images et le contenu en fréquences spatiales des images, qui sont des paramètres de sortie du logiciel d'optimisation du contenu informatif et qui sont des paramètres d'entrée du logiciel d'optimisation de la source d'affichage le contenu informatif réel filmé ou acquis en stéréoscopie la distance interpupillaire du porteur et la distance d'affichage des images étant traitées par le logiciel d'optimisation du contenu informatif pour déterminer l'angle entre les deux caméras propre au contenu informatif filmé ou acquis en stéréoscopie
- la distance du plan de rendu moyen et la distance inter-caméras , qui sont des paramètres de sortie du logiciel d'optimisation de la source d'affichage, et qui sont des paramètres d'entrée du logiciel d'optimisation du système binoculaire de visualisation,-la distance du plan de rendu moyen étant traitée par le logiciel d'optimisation du système de visualisation binoculaire de manière à être égale à la distance d'affichage ,

lesdits paramètres de sortie de ces logiciels d'optimisation étant adaptés à la distance interpupillaire dudit porteur, de sorte que ledit porteur visualise le

contenu informatif par l'intermédiaire du système binoculaire de visualisation dans des conditions les plus adaptées à sa physiologie.

Dans la suite de la description, les termes « logiciel d'optimisation » définissent un ou plusieurs logiciels de type exécutables, dll ou pilotes.

Les composants électroniques sont bien connus de l'homme du métier et peuvent être par exemple de type ASIC (Application Specific Integrated Circuit) ou Eprom.

Les termes « Boucle de gestion des paramètres » définissent une boucle transmission, de stockage et/ou de traitement des paramètres.

L'invention telle qu'ainsi définie présente l'avantage de personnaliser et donc d'adapter spécifiquement le dispositif à chaque utilisateur, permettant ainsi de minimiser, voire de supprimer, toute fatigue visuelle ou inconfort.

Ainsi, le dispositif selon l'invention offre une vision stéréoscopique présentant un effet de relief et une ergonomie visuelle optimisés, l'utilisateur pouvant utiliser le dispositif de façon prolongée sans engendrer de fatigue induite par le non respect de sa physiologie visuelle.

Selon une caractéristique de l'invention, la correction ophtalmique du porteur est un paramètre d'entrée supplémentaire du logiciel d'optimisation du système binoculaire, les paramètres de sortie des logiciels d'optimisation étant adaptés à ladite correction ophtalmique.

Dans un mode de réalisation particulièrement avantageux, le système binoculaire de visualisation présente une parallaxe horizontale inférieure à 1,5° en valeur absolue.

Selon une variante, la parallaxe horizontale peut être inférieure à 1,2° en valeur absolue.

Selon une autre caractéristique de l'invention, le système binoculaire de visualisation présente une parallaxe verticale inférieure à 20'.

Selon un exemple de réalisation, un paramètre de sortie du logiciel d'optimisation du système binoculaire de visualisation est la distance d'affichage des images.

Un paramètre de sortie supplémentaire du logiciel d'optimisation du système binoculaire de visualisation peut être la résolution des écrans.

Selon un autre exemple de réalisation, les paramètres de sortie du contenu informatif sont les suivants :

- le type de contenu informatif,

- la carte de disparité des images, et

- le contenu en fréquences spatiales des images.

Selon un mode de réalisation particulier de l'invention, lorsque le type de contenu informatif est un contenu virtuel, la distance interpupillaire du porteur et/ou la distance d'affichage des images et/ou la position et l'orientation de la tête du porteur peuvent être des paramètres d'entrée du logiciel d'optimisation de la source d'affichage.

Selon un autre mode de réalisation particulier de l'invention, lorsque le type de contenu informatif est un contenu réel filmé ou acquis en stéréoscopie, la résolution des images peut être un paramètre de sortie supplémentaire du logiciel d'optimisation du contenu informatif et/ou la distance d'affichage des images peut être un paramètre d'entrée du logiciel d'optimisation de la source d'affichage.

Selon un autre mode de réalisation particulier de l'invention, lorsque le type de contenu informatif est un contenu réel non stéréoscopique, la distance interpupillaire du porteur et/ou la distance d'affichage des images sont des paramètres d'entrée du logiciel d'optimisation de la source d'affichage.

Avantageusement, le logiciel d'optimisation de la source d'affichage comprend un filtrage des fréquences spatiales exploitant les paramètres d'entrée dudit logiciel suivants :

- la carte de disparité des images, et

- le contenu en fréquences spatiales des images.

Selon un autre exemple de réalisation, des paramètres de sortie du logiciel d'optimisation de la source d'affichage sont les suivants :

- la distance du plan de rendu moyen, et

- la distance inter caméras.

Lorsque la résolution des écrans est un paramètre de sortie supplémentaire du logiciel d'optimisation du système binoculaire de visualisation, la résolution des écrans est un paramètre d'entrée du logiciel d'optimisation de la source d'affichage, et la résolution d'affichage est un paramètre de sortie supplémentaire du logiciel d'optimisation de la source d'affichage.

De manière à faciliter l'agencement du dispositif d'affichage, la source d'affichage peut comprendre les logiciels d'optimisation du système binoculaire, du contenu informatif et de la source d'affichage.

Selon un exemple particulier, la source d'affichage est un appareil ayant une fonction de lecture et/ou d'affichage vidéo, ledit appareil étant choisi parmi un ordinateur, une console de jeux ou un lecteur vidéo portable.

D'autres caractéristiques et avantages de la présente invention apparaîtront à la lumière de la description d'un exemple non limitatif d'un dispositif de visualisation stéréoscopique selon l'invention fait en référence aux figures annotées, dans lesquelles :

La figure 1 représente une vue schématique d'un dispositif d'affichage selon l'invention.

La figure 2 représente un organigramme du logiciel d'optimisation d'un système binoculaire de visualisation d'un dispositif d'affichage selon l'invention.

La figure 3 représente un organigramme du logiciel d'optimisation d'un contenu informatif d'un dispositif d'affichage selon l'invention.

La figure 4 représente un organigramme du logiciel d'optimisation d'une source d'affichage d'un dispositif d'affichage selon l'invention.

La figure 5 représente une boucle de gestion des paramètres formée par les logiciels d'optimisation représentés sur les figures 2 à 4, selon l'invention.

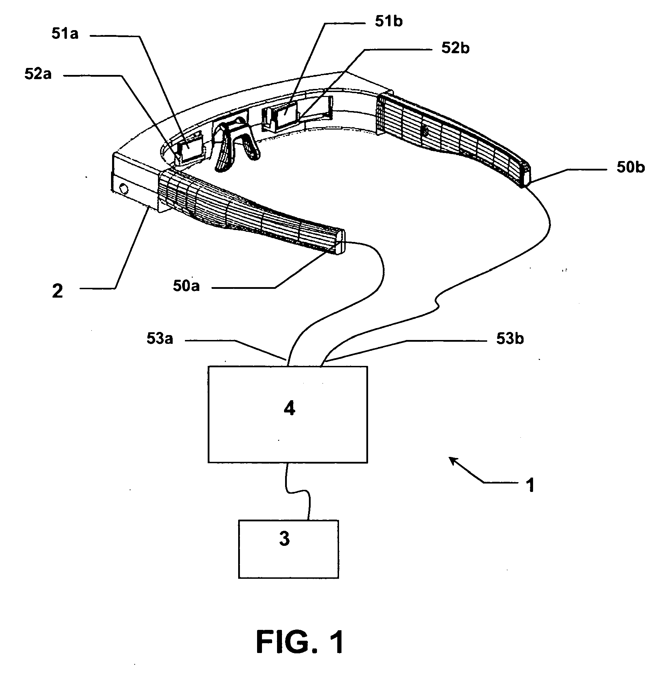

Comme représenté sur la figure 1, le dispositif d'affichage 1 selon l'invention comprend un système binoculaire 2 de visualisation, un contenu informatif 3, et une source d'affichage 4.

Le système binoculaire 2 de visualisation est du type lunette de réalité virtuelle spécialement adapté à la visualisation stéréoscopique comprenant deux entrées vidéo 50a, 50b, et un système de réglage de la distance interpupillaire du porteur.

Le réglage de la distance interpupillaire du porteur peut être actionné manuellement ou de façon motorisée. Il peut permettre un réglage unique et symétrique ou deux réglages indépendants pour chaque oeil, chaque réglage permettant l'ajustement d'un demi-écart pupillaire.

Dans une variante, le système binoculaire 2 comprend un sous-système de réglage de la focalisation des images droite et gauche, permettant de modifier indépendamment l'une de l'autre les distances d'affichage des images droite et gauche.

Le réglage de la distance de focalisation des images peut être actionné manuellement ou de façon motorisée. Il peut permettre un réglage unique et symétrique ou deux réglages indépendants pour chaque image de la distance d'affichage.

De plus, des lentilles correctrices 51 a, 51 b de la vue peuvent être disposées à la volonté du porteur dans les rails en U 52a, 52b.

Le contenu informatif 3 peut se présenter sous trois aspects : un contenu virtuel, ou bien un contenu réel filmé ou acquis en stéréoscopie, ou bien un contenu réel non stéréoscopique.

Le contenu virtuel est issu d'une modélisation et d'un moteur de rendu tridimensionnel.

Il s'apparente à une maquette, une scène, un monde 3D virtuel, sur lesquels on a toutes les latitudes quant à la gestion de l'échelle des objets, des distances minimales et maximales d'affichages, de la position, de l'angle, de la distance entre les caméras, elles-mêmes virtuelles, qui vont générer les images pour le rendu.

Ce type de contenu est particulièrement avantageux, car il permet une optimisation maximum du contenu en regard des paramètres relatifs au système binoculaire de visualisation et à la source d'affichage.

Le contenu réel filmé ou acquis en stéréoscopie est du type scène réelle, c'est-à-dire filmée avec des caméras stéréoscopiques.

Deux caméras avec deux objectifs sont ainsi nécessaires à l'acquisition des images, chacune des caméras correspondant respectivement à la vision de l'oeil droit et de l'oeil gauche d'un individu.

Ce type de contenu est exploitable quand les écarts entre les caméras, les objectifs et leurs angles de visée sont contrôlés.

Le contenu réel non stéréoscopique est du type contenu en 2D émulé pour donner un effet 3D. De ce fait, il est difficile, à priori, d'obtenir un contenu 3D réaliste.

Cependant, il existe un certain nombre de logiciels qui permettent de créer les images gauche et droite à partir d'une image 2D pour obtenir un équivalent stéréoscopique.

Ces logiciels utilisent les indices de l'image pour déduire les positions relatives des éléments en profondeur.

Ces indices sont par exemple la lumière et les ombres produites sur l'objet en fonction de son volume, les dimensions relatives entre les objets, l'interposition ou l'occultation d'un objet par rapport à un autre, le gradient de texture d'une surface, la variation de la visibilité d'une scène extérieure, la perspective, les parallaxes dues aux mouvements.

Le logiciel utilise les paramètres du dispositif de visualisation stéréoscopique de sorte que les images recalculées respectent les conditions optimales de visualisation de la 3D stéréoscopique.

La source d'affichage 4 est un appareil ayant une fonction de lecture et/ou d'affichage vidéo, capable d'effectuer des calculs.

De préférence, ledit appareil est un ordinateur, mais ce peut être également un lecteur DVD, un lecteur MPEG4, une console de jeu portable ou de salon.

La source d'affichage conformément à l'invention comprend deux sorties vidéo 53a, 53b distinctes afin de pouvoir transmettre les images gauche et droite au système binoculaire 2 de visualisation.

Ces deux sorties peuvent physiquement être portées par un même câble si l'on utilise un système de séparation au sein du système binoculaire 2 de visualisation.

Comme représenté sur la figure 1, la source d'affichage 4 est reliée au système binoculaire 2 de visualisation et au contenu informatif 3 par des câbles de transmission de données.

La connexion des deux sorties vidéo peut également être wireless, via un système WiFi, Bluetooth 2 ou autre.

Le dispositif d'affichage 1 comprend des logiciels d'optimisation du système binoculaire 2 de visualisation, du contenu informatif 3 et de la source d'affichage 4, l'optimisation étant spécifique de la distance interpupillaire d'un porteur, de sorte à ce que ledit porteur visualise le contenu informatif 3 par l'intermédiaire du système binoculaire 2 de visualisation en minimisant sa fatigue physiologique.

Le porteur est défini par sa distance interpupillaire 11. Généralement, l'écart interpupillaire 11 du porteur est asymétrique et il doit être décomposé en demi-écarts gauche et droit pour garantir l'optimisation du dispositif d'affichage selon l'invention.

Ces demi-écarts gauche et droit de la distance interpupillaire 11 du porteur sont respectivement d'une part l'écart entre l'orbite gauche et le haut du nez du porteur, et d'autre part l'écart entre l'orbite droit et le haut du nez du porteur, le haut du nez et les deux orbites droite et gauche étant alignés sur un même axe.

La distance interpupillaire 11 propre à chaque individu peut être déterminée facilement par une personne compétente telle qu'un optométriste ou un opticien.

La distance interpupillaire 11 du porteur peut être réglée manuellement et directement sur le système binoculaire 2 de visualisation par une procédure que le porteur peut éventuellement effectuer seul ou bien indirectement par l'entrée dans les champs d'interfaces de la source d'affichage 4, le réglage se faisant alors automatiquement, via la transmission de ladite distance interpupillaire 11 audit système binoculaire 2 de visualisation, sur la base de mesures effectuées par une personne compétente.

Un autre paramètre propre au porteur est sa correction ophtalmique 12.

La correction ophtalmique du porteur peut être obtenue par exemple directement via le système binoculaire de visualisation en ajoutant des lentilles correctrices conformément à la prescription d'une personne compétente.

Un autre paramètre propre au porteur est la position et l'orientation 13 de sa tête dans un référentiel prédéfini.

Ce paramètre peut être calculé en temps réel dans le cas de l'utilisation d'un système de traçage de la position et de l'orientation de la tête, ledit système de traçage pouvant être par exemple un système inertiel, optique, magnétique.

Avantageusement, ce paramètre est utilisé lorsque le contenu informatif est du type contenu virtuel, notamment un jeu vidéo.

Les paramètres propres au porteur, notamment sa distance interpupillaire 11, sont transmis aux logiciels d'optimisation du système binoculaire 2 de visualisation et/ou du contenu informatif 3 et/ou de la source d'affichage 4.

Tout type de moyen de transmission bien connu de l'homme du métier peut être utilisé pour former la boucle de gestion de paramètres.

Par exemple, lorsque la distance interpupillaire 11 du porteur est réglée directement sur le système binoculaire 2 de visualisation, elle est stockée dans une mémoire spécialement destinée à cet effet de type mémoire flash. La distance interpupillaire 11 ainsi stockée est alors transmise à la source d'affichage 4 par une connexion de type filaire ou sans fil.

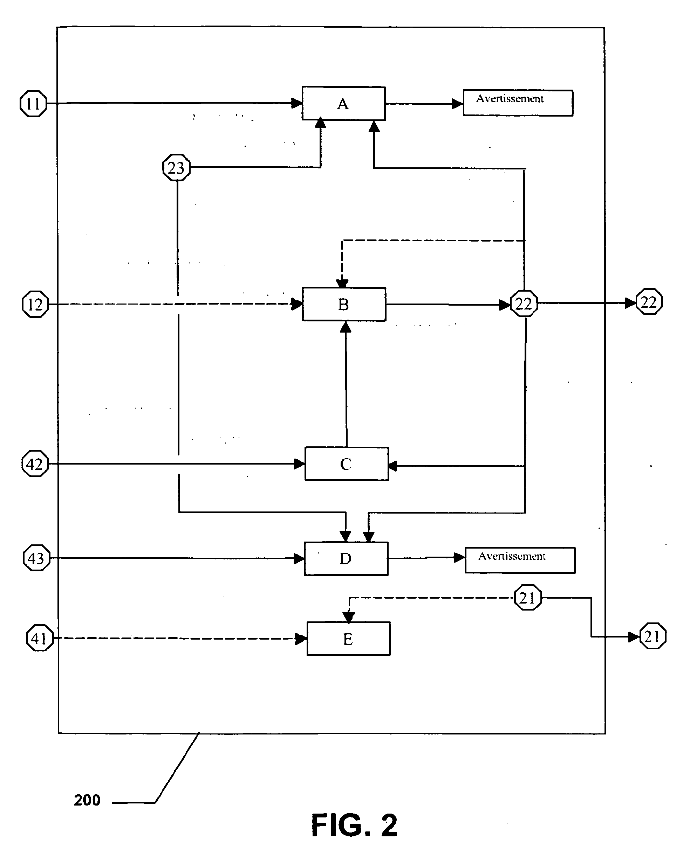

Les figures 2 à 4 représentent respectivement un exemple d'organigramme du logiciel 200 d'optimisation du système binoculaire 2 de visualisation, un exemple d'organigramme du logiciel 300 d'optimisation du contenu informatif 3 et un exemple d'organigramme du logiciel 400 d'optimisation de la source d'affichage 4.

Lesdits logiciels 200, 300, 400 forment ensemble une boucle de gestion de paramètres mis en oeuvre dans le dispositif de visualisation stéréoscopique conformément à l'invention.

Ils fonctionnent ensemble pour produire une image droite et une image gauche, visualisées respectivement par l'oeil droit et l'oeil gauche du porteur.

Les références « A » à « M » dans les figures 2 à 4 représentent une ou plusieurs étapes de traitement informatique d'un ou de plusieurs paramètres du dispositif d'affichage conformément à l'invention.

Selon la figure 2, le logiciel 200 d'optimisation du système binoculaire 2 de visualisation traite les paramètres propres audit système binoculaire de visualisation, à savoir :

- la distance d'affichage 22 de l'image, et
- la distance interpupillaire 23 du système binoculaire 2 de visualisation,

la parallaxe verticale dudit système binoculaire 2 étant inférieure à 20'.

La distance d'affichage 22 de l'image correspond à la distance apparente de l'image obtenue après focalisation par le système binoculaire de visualisation, et ne dérive ainsi pas de la parallaxe.

La distance interpupillaire 11 du porteur est intégrée au système binoculaire 2 de visualisation par un réglage manuel ou automatique de la distance interpupillaire 23 du système binoculaire 2 de visualisation.

Plus particulièrement, les demi-écarts gauche et droit de la distance interpupillaire 11 du porteur sont intégrés au système binoculaire 2 de visualisation par un réglage manuel ou automatique des demi-écarts gauche et droit de la distance interpupillaire 23 du système binoculaire 2 de visualisation.

Le logiciel 200 d'optimisation du système binoculaire 2 de visualisation permet également de traiter différents paramètres d'entrée provenant du porteur et du logiciel 400 d'optimisation de la source d'affichage 4, à savoir :

- la distance interpupillaire 11 du porteur,
- la distance du plan moyen de rendu 42, et
- la distance inter caméras 43.

On considère que le porteur du système binoculaire 2 de visualisation est un porteur emmétrope ou un porteur amétrope avec une correction ophtalmique de type lunettes de correction, lentilles de contact ou pastilles correctrices positionnées sur ledit système binoculaire 2 de visualisation.

La distance interpupillaire 11 du porteur ainsi que la distance interpupillaire 23 du système binoculaire de visualisation et la distance d'affichage 22 des images sont traitées en A de sorte à garantir une parallaxe horizontale Ph1 toujours inférieure à 1,5° en valeur absolue.

Des informations complémentaires sur les parallaxes sont détaillées dans *Le traité de la réalité virtuelle tome 1* : « 4.2.5.6 Les caractéristiques psychophysiques de la vision stéréoscopique ».

La parallaxe horizontale Ph1 du système binoculaire 2 de visualisation est calculée selon l'équation suivante :

$$Ph1 = \left[ \operatorname{atan}\left( \frac{\text{IPDsystème 23Gauche}}{\text{Distance d'affichage 22 des images}} \right) + \operatorname{atan}\left( \frac{\text{IPDsystème 23Droit}}{\text{Distance d'affichage 22 des images}} \right) \right]$$
$$- \left[ \operatorname{atan}\left( \frac{\text{IPDporteur 11Gauche}}{\text{Distance d'affichage 22 des images}} \right) + \operatorname{atan}\left( \frac{\text{IPDporteur 11Droit}}{\text{Distance d'affichage 22 des images}} \right) \right]$$

atan dans laquelle :

- IPDsystème23Gauche représente le demi-écart interpupillaire gauche du système binoculaire de visualisation,
- IPDsystème23Droit représente le demi-écart interpupillaire droit du système binoculaire de visualisation,
- IPDporteur11 Gauche représente le demi-écart interpupillaire gauche du porteur, et
- IPDporteur11 Droit représente le demi-écart interpupillaire droit du porteur.

Dans le meilleur des cas, si le réglage de la distance interpupillaire 23 du système binoculaire de visualisation est assez précis, Ph1 est sensiblement proche de zéro en considérant que le porteur est emmétrope ou que le porteur porte, en plus du système binoculaire 2 de visualisation, un dispositif de correction tel qu'une paire de lunettes correctrices ou de lentilles de contact ou une paire de pastilles correctrices agencée sur ledit système binoculaire.

Lorsque la parallaxe horizontale Ph1 est supérieure à 1,5° en valeur absolue, la distance interpupillaire 23 du système binoculaire de visualisation doit être modifiée pour obtenir Ph1 inférieure à 1,5° en valeur absolue.

Ce dernier cas peut arriver par exemple lorsque la distance interpupillaire 11 du porteur n'a pas été réglée correctement sur le système binoculaire 2 de visualisation.

Le porteur reçoit alors un avertissement indiquant que les conditions pour avoir une visualisation stéréoscopique optimisée limitant la fatigue visuelle et l'inconfort ne sont pas respectées.

Si le système binoculaire 2 de visualisation dispose d'un réglage automatique de la distance interpupillaire 23, alors celui-ci est enclenché pour amener la valeur de la distance interpupillaire 23 stockée dans ledit système binoculaire 2 à la valeur de l'écart interpupillaire 11 du porteur.

Une fois ces deux valeurs égales, le système binoculaire est considéré comme réglé.

Par ailleurs, dans le cas de certains types de porteur, il peut être préférable d'avoir une parallaxe horizontale Ph1 inférieure à 1,2°.

La distance d'affichage 22 ainsi modifiée est traitée en B, et est prise en compte pour l'optimisation des différents paramètres du logiciel 200.

La distance du plan moyen de rendu 42 de la source d'affichage ainsi que la distance d'affichage 22 des images sont traitées en C.

L'objet de ce traitement est d'obtenir une distance d'affichage 22 égale à la distance du plan moyen de rendu 42.

Si cette distance d'affichage 22 est différente de la distance du plan moyen de rendu 42, alors elle prend la valeur de la distance du plan moyen de rendu 42.

Optionnellement, comme représenté sur la figure 2 par des flèches en pointillé, la correction ophtalmique 12 du porteur ainsi que la distance d'affichage 22 des images peuvent être traitées en B.

En effet, si le porteur du système binoculaire 2 de visualisation a une mauvaise correction ophtalmique 12, cette dernière peut être corrigée indirectement en agissant sur la distance d'affichage 22 des images.

Par conséquent, lorsque la distance d'affichage 22 est à une distance non visible pour la correction ophtalmique 12 du porteur, la distance d'affichage 22 est modifiée.

La distance d'affichage 22 ainsi modifiée, est traitée en B, et est également prise en compte pour l'optimisation des différents paramètres du logiciel 200.

Alternativement, pour permettre au porteur de voir net, on peut utiliser des pastilles correctrices 51a et 51 b sans changer la distance d'affichage 22.

Un message d'avertissement, par exemple sonore, peut rappeler à l'utilisateur de bien mettre en place les pastilles de correction 51 a et 51 b.

La distance interpupillaire 11 du porteur est intégrée au système binoculaire 2 de visualisation par un réglage manuel ou automatique de la distance interpupillaire 23 du système binoculaire 2 de visualisation.

La distance inter caméras 43 de la source d'affichage ainsi que la distance interpupillaire 23 du système binoculaire de visualisation et la distance d'affichage 22 des images sont traitées en D afin d'effectuer un contrôle sur la valeur de la parallaxe horizontale en calculant :

$$Ph2 = \left[ atan\left( \frac{\text{Distance inter caméras43Gauche}}{\text{Distance d'affichage 22 des images}} \right) + atan\left( \frac{\text{Distance inter caméras43Droite}}{\text{Distance d'affichage 22 des images}} \right) \right]$$
$$- \left[ atan\left( \frac{\text{IPDsystème 23Gauche}}{\text{Distance d'affichage 22 des images}} \right) + atan\left( \frac{\text{IPDsystème 23Droit}}{\text{Distance d'affichage 22 des images}} \right) \right]$$

dans laquelle :

- IPDsystème23Gauche représente le demi-écart interpupillaire gauche du système binoculaire de visualisation,
- IPDsystème23Droit représente le demi-écart interpupillaire droit du système binoculaire de visualisation,
- Distance inter caméras 43Gauche représente la demi-distance inter caméras gauche de la source d'affichage, et
- Distance inter caméras 43Droite représente la demi-distance inter caméras droite de la source d'affichage.

Si la parallaxe horizontale Ph2 est supérieure à 1,5° en valeur absolue, le porteur reçoit un avertissement indiquant que les conditions pour avoir une visualisation stéréoscopique optimisée limitant la fatigue visuelle et l'inconfort ne sont pas respectées.

Par ailleurs, la résolution des écrans 21 droite et gauche est un paramètre supplémentaire propre au système binoculaire 2 de visualisation qui peut être pris en compte dans la boucle de gestion de paramètres.

La résolution d'affichage 41 de la source d'affichage ainsi que la résolution des écrans 21 sont traitées en E.

Lorsque la résolution d'affichage 41 est supérieure à la résolution des écrans 21, la résolution d'affichage 41 est réduite de sorte à obtenir une résolution identique à celle des écrans 21.

Lorsque la résolution d'affichage 41 est inférieure à la résolution des écrans 21, les images sont interpolées, au moyen d'un filtre d'interpolation au préalable de leur affichage, par le système de visualisation de sorte que la résolution d'affichage 41 soit identique à celle des écrans 21.

Ainsi les paramètres d'entrée 11, 12, 41, 42 et 43 sont traités par le logiciel 200 d'optimisation du système binoculaire 2 de visualisation afin d'obtenir en sortie dudit logiciel 200 les paramètres 21 et 22.

La boucle de gestion comprend lesdits paramètres de sortie 21 et/ou 22 qui sont transmis au logiciel 300 d'optimisation du contenu informatif 3 comme paramètres d'entrée dudit logiciel 300.

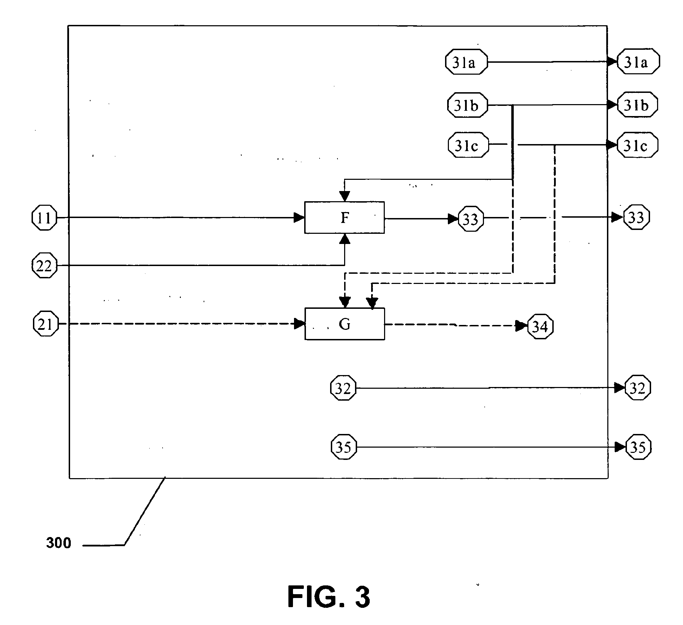

Selon la figure 3, le logiciel 300 d'optimisation du contenu informatif 3 traite les paramètres propres audit contenu informatif, à savoir :

- le type de contenu pouvant être virtuel 31 a ou bien réel filmé ou acquis en stéréoscopie 31 b ou bien réel non stéréoscopique 31 c,
- la carte de disparités 32 des images, qui est la répartition de la disparité dans les images, et
- le contenu en fréquences spatiales 35 des images.

Le logiciel 300 d'optimisation du contenu informatif 3 permet également de traiter différents paramètres d'entrée provenant du porteur et du logiciel 200 d'optimisation du système binoculaire 2 de visualisation, à savoir :

- la distance interpupillaire 11 du porteur, et
- la distance d'affichage 22 des images.

Lorsque le contenu informatif est du type contenu réel filmé ou acquis en stéréoscopie 31 b, ledit contenu ainsi que la distance interpupillaire 11 du porteur et la distance d'affichage 22 des images sont traités en F afin de déterminer l'angle 33 entre les deux caméras propre au contenu informatif 31 b selon les équations suivantes :

$$\text{Angle 33 entre les deux caméras} = \text{Angle 33Gauche} + \text{Angle 33Droit}$$

$$\text{Angle 33 Gauche} = \text{atan}\left(\frac{\text{IPDporteur 11}\textit{Gauche}}{\text{Distance d'affichage 22 des images}}\right)$$

$$\text{Angle 33 Droite} = \text{atan}\left(\frac{\text{IPDporteur 11}\textit{Droit}}{\text{Distance d'affichage 22 des images}}\right)$$

dans lesquelles :

- IPDporteur 11 Droit représente le demi-écart interpupillaire droit du porteur,
- IPDporteur 11 Gauche représente le demi-écart interpupillaire gauche du porteur,
- Angle 33Gauche représente le demi angle de visé gauche par rapport à l'axe de visée médian, c'est-à-dire l'axe perpendiculaire à l'axe qui porte les deux caméras, et
- Angle 33Droit représente le demi angle de visée droit par rapport à l'axe de visée médian, c'est-à-dire perpendiculaire à l'axe qui porte les deux caméras.

Optionnellement, comme représenté sur la figure 3 par des flèches en pointillé, lorsque le contenu informatif est du type contenu réel filmé ou acquis en stéréoscopie 31 b ou bien contenu réel non stéréoscopique 31 c, lesdits contenus ainsi que la résolution des écrans 21 sont traités en G afin d'obtenir une résolution des images 34 propre au contenu informatif 31 b ou 31 c, égale à la résolution des écrans 21.

De ce fait, la taille des images du contenu informatif est optimisée et les images peuvent être traitées plus rapidement dans le dispositif de visualisation stéréoscopique.

Ainsi les paramètres d'entrée 11, 21 et 22 sont traités par le logiciel 300 d'optimisation du contenu informatif 3 afin d'obtenir en sortie dudit logiciel 300 les paramètres 32, 33, 35 et 31 a, 31 b ou 31c selon le type de contenu.

La boucle de gestion comprend lesdits paramètres de sortie 31a, 31 b, 31 c, 32, 33 et/ou 35 qui sont transmis au logiciel 400 d'optimisation de la source d'affichage 4 comme paramètres d'entrée dudit logiciel 400.

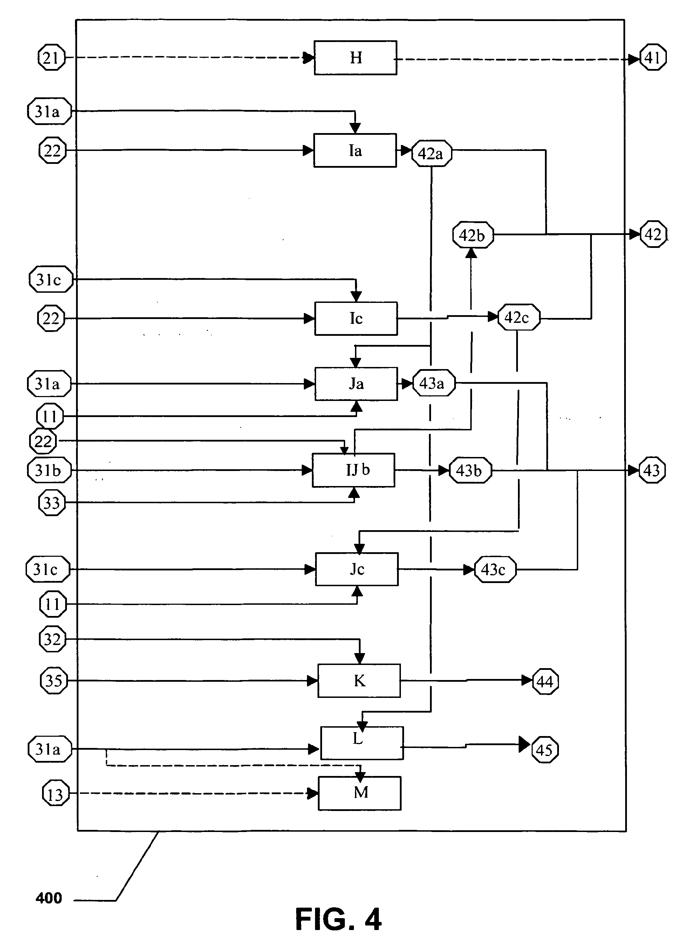

Selon la figure 4, le logiciel 400 d'optimisation de la source d'affichage 4 traite les différents paramètres d'entrée provenant du porteur 1, du logiciel 200 d'optimisation du système binoculaire 2 de visualisation et du logiciel 300 d'optimisation du contenu informatif 3, à savoir :

- le contenu informatif de type virtuel 31 a ou bien réel stéréoscopique 31 b ou bien réel non stéréoscopique 31 c,
- la carte de disparité 32 des images, et
- le contenu en fréquences spatiales 35 des images,

et, selon le type de contenu informatif :

- la distance interpupillaire 11 du porteur,
- la distance d'affichage 22 des images, et
- l'angle 33 entre les deux caméras.

Lorsque le contenu informatif est du type contenu virtuel 31 a, ledit contenu 31a ainsi que la distance d'affichage 22 des images sont traités en Ia afin d'obtenir une distance du plan moyen de rendu 42a propre à la source d'affichage 4.

Ainsi, pour paramétrer les caméras virtuelles utilisées pour afficher les images à partir du contenu virtuel 31 a, la distance du plan moyen de rendu 42a est égale à la distance d'affichage 22.

Lorsque le contenu informatif est du type contenu réel filmé ou acquis en stéréoscopie 31b, ledit contenu 31b, l'angle 33 entre les deux caméras ainsi que la distance d'affichage 22 des images sont traités en IJb afin d'obtenir une distance du plan moyen de rendu 42b et une distance inter caméras 43b propres à la source d'affichage 4.

Ainsi, pour générer les images gauche et droite, la distance du plan moyen de rendu 42b est égale à la distance d'affichage 22.

L'angle 33 entre les deux caméras permet de déduire, avec la distance du plan moyen de rendu 42b, la distance inter caméras 43b selon l'équation suivante :

$$\text{Distance inter caméras } 43b = \tan(\text{Angle } 33) * \text{Distance du plan moyen de rendu } 42b$$

Plus particulièrement lors d'une asymétrie de l'écart interpupillaire 11 du porteur, l'angle 33 est décomposé en deux demi-angles gauche et droit, et la distance inter caméras 43b est décomposée en deux demi-distance inter caméras gauche et droite.

Ainsi l'équation de la distance inter caméras 43b devient :

$$\text{Distance inter caméras } 43b = \text{Distance inter caméras } 43b\text{Gauche} + \text{Distance inter caméras } 43b\text{Droite}$$

dans laquelle :

$$\text{Distance inter caméras } 43b\text{Gauche} = \tan(\text{Angle } 33\text{Gauche}) * \text{Distance du plan moyen de rendu } 42b$$

$$\text{Distance inter caméras } 43b\text{Droite} = \tan(\text{Angle } 33\text{Droite}) * \text{Distance du plan moyen de rendu } 42b$$

Il faut donc respecter un facteur global de proportionnalité, pondéré en fonction de l'asymétrie éventuelle de l'écart interpupillaire du porteur entre la distance du plan moyen de rendu 42b et la distance inter caméras 43b.

Ceci implique un réglage simultané et systématique des deux paramètres 42b et 43b. Ce réglage se faisant, par exemple, au niveau des objectifs de chacune des deux caméras pour la distance du plan moyen de rendu 42b.

Lorsque le contenu informatif est du type contenu réel non stéréoscopique 31 c, ledit contenu 31 c ainsi que la distance d'affichage 22 des images sont traités en Ic afin d'obtenir une distance du plan moyen de rendu 42c, spécifique dudit contenu 31 c.

Ainsi, pour générer les images gauche et droite, la distance du plan moyen de rendu 42c est égale à la distance d'affichage 22.

Le contenu virtuel 31 a ainsi que la distance interpupillaire 11 du porteur et la distance du plan moyen de rendu 42a sont traités en Ja afin d'obtenir une distance inter caméras 43a propre à la source d'affichage 4.

Ainsi, en accord avec la distance du plan moyen de rendu 42a pour respecter la condition parallaxe horizontale inférieure à 1,5° en valeur absolue, les distances inter caméras 43a gauche et droite de la source d'affichage sont égales à la distance interpupillaire 11 du porteur, avec la tolérance suivante :

$$\left| \left[ atan\left( \frac{\text{Distance inter caméras } 43aGauche}{\text{Distance du plan moyen de rendu } 42a} \right) + atan\left( \frac{\text{Distance inter caméras } 43aDroite}{\text{Distance du plan moyen de rendu } 42a} \right) \right] - \left[ atan\left( \frac{IPDporteur\ 11Gauche}{\text{Distance du plan moyen de rendu } 42a} \right) + atan\left( \frac{IPDporteur\ 11Droite}{\text{Distance du plan moyen de rendu } 42a} \right) \right] \right| < 1.5°$$

Le contenu réel non stéréoscopique 31 c ainsi que la distance interpupillaire 11 du porteur et la distance du plan moyen de rendu 42c sont traités en Jc afin d'obtenir la distance inter caméras 43c de la source d'affichage spécifique dudit contenu 31 c.

Ainsi, en accord avec la distance du plan moyen de rendu 42c pour respecter la condition de parallaxe horizontale inférieure à 1,5°, en valeur absolue, les distances inter caméras 43c gauche et droite de la source d'affichage sont égales à la distance interpupillaire 11 du porteur, avec la tolérance suivante :

$$\left| \left[ atan\left( \frac{\text{Distance inter caméras } 43cGauche}{\text{Distance du plan moyen de rendu } 42a} \right) + atan\left( \frac{\text{Distance inter caméras } 43cDroite}{\text{Distance du plan moyen de rendu } 42a} \right) \right] - \left[ atan\left( \frac{IPDporteur\ 11Gauche}{\text{Distance du plan moyen de rendu } 42a} \right) + atan\left( \frac{IPDporteur\ 11Droite}{\text{Distance du plan moyen de rendu } 42a} \right) \right] \right| < 1.5°$$

La carte de disparité 32 des images ainsi que le paramètre du contenu en fréquences spatiales 35 des images sont traités en K afin d'obtenir un contenu en fréquences spatiales 44 filtré propre à la source d'affichage 4.

L'algorithme de filtrage permet de filtrer les fréquences spatiales pour obtenir un contenu fréquentiel 44 moins fatigant que le contenu fréquentiel 35, ce type de filtrage permet de diminuer les effets résultant de l'absence de plusieurs plans de focalisation dans les systèmes d'affichage stéréoscopique. On diminue ainsi la fatigue due aux conflits d'accommodation-convergence.

Ce type d'algorithme est bien connu de l'homme du métier et permet de limiter la fatigue visuelle soit en masquant les points où les fréquences spatiales et les disparités ne sont pas compatibles, soit en tronquant le contenu des fréquences spatiales dans les hautes fréquences pour faciliter la fusion des images.

Des exemples de méthodes de filtrage des fréquences sont décrits dans *Le traité de la réalité virtuelle tome1* : « 10.6.4.2 Méthodes par filtrages fréquentiels ».

Le contenu virtuel 31 a ainsi que la distance du plan moyen de rendu 42a sont traités en L afin d'obtenir une distance d'affichage 45 propre à la source d'affichage 4.

Ladite distance d'affichage 45 est comprise entre une distance minimale et une distance maximale d'affichage.

Ces distances minimale et maximale doivent respecter les conditions d'affichage de l'aire de Panum.

L'aire de Panum, décrite dans *Le traité de la réalité virtuelle tome1 :* « 4.2.4.2 Convergence et disparité rétinienne» et « 4 .2.4.3 Stéréopsie et diplopie », correspond à la zone de l'espace permettant une vision stéréoscopique avec fusion des images gauche et droite.

Le traitement en L se fait en prenant comme plan médian la distance 42a obtenu par le traitement la afin de déterminer la latitude d'affichage au devant et en arrière de ce plan au regard du contenu affiché et en respectant les conditions de l'aire de Panum.

Ainsi, pour une distance inférieure à la distance minimale, le système n'affiche aucune information du contenu virtuel 31 a et de même pour une distance supérieure à la distance maximale.

Le traitement implique également une possible modification de l'échelle d'affichage du contenu virtuel 31 a pour que la scène affichée respecte les distances minimale et maximale d'affichage. Ceci se traduit par un paramétrage des caméras virtuelles utilisées pour l'affichage du contenu virtuel 31 a (changement de focales).

Optionnellement, comme représenté sur la figure 4 par des flèches en pointillé, la résolution des écrans 21 propre au système binoculaire 2 de visualisation peut être traitée en H afin d'obtenir une source d'affichage adaptée au système binoculaire de visualisation de sorte à avoir la résolution d'affichage 41 de la source d'affichage 4 égale à la résolution des écrans 21.

De plus, lorsque le contenu informatif est du type contenu virtuel 31 a, ledit contenu 31 a ainsi que la position et l'orientation 13 de la tête du porteur peuvent être traités en M afin d'obtenir une position de l'entraxe et une direction de visée pour l'axe de visée des deux caméras virtuelles.

Le traitement en M fait correspondre, en temps réel, la position des caméras et leur angle de visée médian aux données de position et d'orientation 13 de la tête du porteur lors du déplacement du porteur dans le référentiel défini dans le contenu virtuel 31 a.

Ainsi les paramètres d'entrée 31a, 31b ou 31c selon le type de contenu, 11, 13, 21, 22, 32, 33 et 35 sont traités par le logiciel 400 d'optimisation de la source d'affichage 4 afin d'obtenir en sortie dudit logiciel 400 les paramètres 41, 42 et 43.

La boucle de gestion comprend lesdits paramètres de sortie 41, 42 et/ou 43 qui sont transmis au logiciel 200 d'optimisation du système binoculaire 2 de visualisation comme paramètres d'entrée dudit logiciel 200.

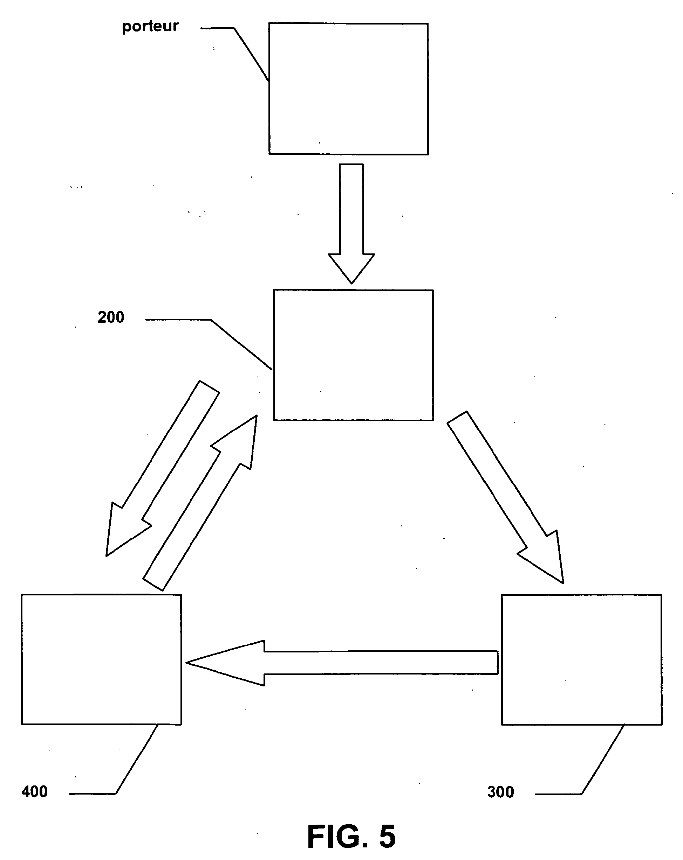

La figure 5 représente un exemple de boucle de gestion des paramètres, formée par les logiciels d'optimisation représentés sur les figures 2 à 4, selon l'invention.

Au moins un paramètre propre au porteur, nécessaire à la boucle de gestion des paramètres, est par exemple stocké dans le logiciel 200 d'optimisation du système binoculaire et est transmis aux logiciels 300 et/ou 400 en tant que paramètres d'entrée selon ou non le type de contenu informatif.

Les paramètres de sortie du logiciel 200 sont transmis en tant que paramètres d'entrée du logiciel 300 et sont traités par ledit logiciel 300.

Les paramètres de sortie du logiciel 300 sont transmis en tant que paramètres d'entrée du logiciel 400 et sont traités par ledit logiciel 400.

Les paramètres de sortie du logiciel 400 sont transmis en tant que paramètres d'entrée du logiciel 200 et sont traités par ledit logiciel 200.

Dans une autre variante, le ou les paramètres propres au porteur, nécessaires à la boucle de gestion des paramètres, peuvent être par exemple stockés dans le logiciel 300 d'optimisation du contenu informatif et transmis aux logiciels 200 et/ou 400 en tant que paramètres d'entrée selon ou non le type de contenu informatif.

Ou bien encore, le ou les paramètres propres au porteur, nécessaires à la boucle de gestion des paramètres, peuvent être par exemple stockés dans le logiciel 400 d'optimisation de la source d'affichage et transmis aux logiciels 200 et/ou 300 en tant que paramètres d'entrée selon ou non le type de contenu informatif.

La présente invention n'est pas limitée à l'exemple de mise en oeuvre qui vient d'être décrit et porte dans sa généralité sur tous les dispositifs de visualisation stéréoscopique envisageables à partir des indications générales fournies dans l'exposé de l'invention.

Notamment, les logiciels 200, 300 et 400 d'optimisation respectivement du système binoculaire 2 de visualisation, du contenu informatif 3 et de la source d'affichage 4, peuvent être intégrés ensemble à la source d'affichage 4 de type ordinateur.

**Revendications**

**1.** Dispositif d'affichage (1) pour la visualisation stéréoscopique comprenant :

- un système binoculaire (2) de visualisation, et
- une source d'affichage (4) étant un appareil ayant une fonction de lecture d'un contenu informatif (3) choisi parmi un contenu virtuel (31a), un contenu réel filmé ou acquis en stéréoscopie (31 b), et un contenu réel non stéréoscopique (31 c) et/ou d'affichage vidéo pour ledit système binoculaire de vision;
**caractérisé en ce qu'**il comprend en outre des composants électroniques pour la mise en oeuvre des logiciels (200, 300, 400) d'optimisation du système binoculaire (2) de visualisation, du contenu informatif (3) et de la source d'affichage (4), lesdits logiciels d'optimisation formant ensemble une boucle de gestion des paramètres suivants :
- la distance interpupillaire (11) d'un porteur, qui est un paramètre d'entrée des logiciels (200, 300) d'optimisation du système binoculaire (2) de visualisation et du contenu informatif (3),
- la distance d'affichage (22) des images, qui est un paramètre de sortie du logiciel (200) d'optimisation du système binoculaire (2) de visualisation et qui est un paramètre d'entrée du logiciel (300) d'optimisation du contenu informatif (3), ledit paramètre (22) et la distance interpupillaire (11) étant traités par le logiciel d'optimisation (200) du système binoculaire (2) de manière à garantir une parallaxe horizontale inférieure à 1,5° en valeur absolue,
- le contenu informatif virtuel (31 a), le contenu informatif filmé ou réel acquis en stéréoscopie (31 b), le contenu informatif filmé ou réel non stéréoscopique (31 c), la carte de disparité des images (32) et le contenu en fréquences spatiales (35) des images, qui sont des paramètres de sortie du logiciel (300) d'optimisation du contenu informatif (3) et qui sont des paramètres d'entrée du logiciel (400) d'optimisation de la source d'affichage (4), le contenu informatif réel filmé ou acquis en stéréoscopie (31 b), la distance interpupillaire (11) du porteur et la distance d'affichage (22) des images étant traitées par le logiciel d'optimisation (300) du contenu informatif (3) pour déterminer l'angle (33) entre les deux caméras virtuelles propre au contenu informatif filmé ou acquis en stéréoscopie (31 b),

- la distance du plan de rendu moyen (42) et la distance inter-caméras (43), qui sont des paramètres de sortie du logiciel (400) d'optimisation de la source d'affichage (4), et qui sont des paramètres d'entrée du logiciel (200) d'optimisation du système binoculaire (2) de visualisation, la distance du plan de rendu moyen (42) étant traitée par le logiciel d'optimisation (200) du système de visualisation binoculaire (2) de manière à être égale à la distance d'affichage (22),

lesdits paramètres de sortie de ces logiciels (200, 300, 400) d'optimisation étant adaptés à la distance interpupillaire (11) dudit porteur, de sorte que ledit porteur visualise le contenu informatif (3) par l'intermédiaire du système binoculaire (2) de visualisation dans des conditions les plus adaptées à sa physiologie.

2. Dispositif selon la revendication 1, **caractérisé en ce que** la parallaxe horizontale est inférieure à 1,2° en valeur absolue.

3. Dispositif selon l'une quelconque des revendications 1 ou 2 lorsque le contenu informatif (3) est le contenu virtuel (31 a), **caractérisé en ce que** la position et l'orientation (13) de la tête du porteur est un paramètre d'entrée du logiciel (400) d'optimisation de la source d'affichage (4), et **en ce que** ledit contenu informatif virtuel (31 a) et ladite position et ladite orientation (13) sont traités par ledit logiciel (400) d'optimisation afin d'obtenir une position de l'entraxe et une direction de visée pour l'axe de visée des deux caméras virtuelles.

4. Dispositif selon l'une quelconque des revendications 1 à 3 lorsque le contenu informatif (3) est le contenu réel filmé ou acquis en stéréoscopie (31 b), **caractérisé en ce que** ledit système binoculaire de Visualisation compound des écrans (21) dont la résolution est un paramètre d'entrée du logiciel (300) d'optimisation du contenu informatif (3), et **en ce que** ladite résolution des écrans (21) et ledit contenu informatif (31 b) sont traités par ledit logiciel d'optimisation (300) afin d'obtenir une résolution (34) des images propre audit contenu informatif (31 b) et égale à la résolution des écrans (21).

5. Dispositif selon l'une quelconque des revendications 1 à 4 lorsque le contenu informatif (3) est le contenu virtuel (31a) ou le contenu réel non stéréoscopique (31 c), **caractérisé en ce que** la distance interpupillaire (11) du porteur est un paramètre d'entrée supplémentaire du logiciel (400) d'optimisation de la source d'affichage (4).

6. Dispositif selon l'une quelconque des revendications précédentes **caractérisé en ce que** la distance d'affichage (22) des images est un paramètre d'entrée supplémentaire du logiciel (400) d'optimisation de la source d'affichage (4).

7. Dispositif l'une quelconque des revendications précédentes, **caractérisé en ce que** la carte de disparité (32) des images ainsi que la paramètre du contenu en fréquences spatiales (35) sont traités par le logiciel (400) d'optimisation de la source d'affichage (4) afin d'obtenir un contenu en fréquences spatiales (44) filtré propre à la source d'affichage (4).

8. Dispositif selon l'une quelconque des revendications précédentes, **caractérisé en ce que** la correction ophtalmique (12) du porteur est un paramètre d'entrée supplémentaire du logiciel (200) d'optimisation du système binoculaire (2) de visualisation, les paramètres de sortie dudit logiciel (200) étant adaptés à ladite correction ophtalmique (12).

9. Dispositif selon l'une quelconque des revendications précédentes, **caractérisé en ce que** ledit système binoculaire de visualisation comprend des écrans (21) et un paramètre de sortie supplémentaire du logiciel (200) d'optimisation du système binoculaire (2) de visualisation est la résolution des écrans (21).

10. Dispositif selon la revendication 9, **caractérisé en ce que** la résolution des écrans (21) est un paramètre d'entrée du logiciel (400) d'optimisation de la source d'affichage (4).

11. Dispositif selon la revendication 10, **caractérisé en ce que** la résolution d'affichage (41) est un paramètre de sortie supplémentaire du logiciel (400) d'optimisation de la source d'affichage (4), et **en ce que** la résolution des écrans (21) peut être traitée par le logiciel (400) d'optimisation de la source d'affichage (4) afin d'obtenir une résolution d'affichage (41) de ladite source d'affichage (4) égale à la résolution des écrans (21).

**12.** Dispositif selon l'une quelconque des revendications précédentes, **caractérisé en ce que** le système binoculaire de visualisation présente une parallaxe verticale inférieure à 20'.

**13.** Dispositif selon l'une quelconque des revendications précédentes, **caractérisé en ce que** la source d'affichage (4) comprend les logiciels (200, 300, 400) d'optimisation du système binoculaire (2) de visualisation, du contenu informatif (3) et de la source d'affichage (4).

**14.** Dispositif selon l'une quelconque des revendications précédentes, **caractérisé en ce que** ladite source d'affichage (4) est choisi parmi un ordinateur, une console de jeux et un lecteur vidéo portable.

**Claims**

**1.** A display device (1) for stereoscopic viewing, comprising:

- a binocular viewing system (2), and
- a display source (4) being apparatus having a function of reading an informative content (3) chosen from a virtual content (31a), a real content filmed or stereoscopically acquired (31b) and a real non- stereoscopic content (31c), and/or of generating video display signals for the said binocular viewing system,

**characterized in that** it further comprises electronic components for implementing software (200, 300, 400) optimizing the binocular viewing system (2), the informative content (3) and the display source (4), the said optimization software together forming a management loop of the following parameters:

- the interpupillary distance (11) of a wearer, which is an input parameter into the software (200, 300) optimizing the binocular viewing system (2) and the informative content (3),
- the display distance (22) of the images which is an output parameter from the software (200) optimizing the binocular viewing system (2) and which is an input parameter into the software (300) optimizing the informative content (3), the said parameter (22) and interpupillary distance (11) being processed by the software (200) optimizing the binocular system (2) so as to guarantee a horizontal parallax of less than 1.5° in absolute value,
- the virtual informative content (31a), the informative content filmed or real acquired stereoscopically (31b), the informative content filmed or non-stereoscopically real (31c), the image disparity card (32) and the spatial frequency content (35) of the images, which are output parameters from the software (300) optimizing the informative content (3) and which are input parameters into the software (400) optimizing the display source (4), the real informative content filmed or stereoscopically acquired (31b), the interpupillary distance (11) of the wearer and the display distance (22) of the images being processed by the software (300) optimizing the informative content (3) to determine the angle (33) between the two virtual cameras particular to the filmed or stereoscopically acquired informative content (31b),
- the distance of the mean plane of rendering (42) and the inter-camera distance (43) which are output parameters from the software (400) optimizing the display source (4) and which are input parameters into the software (200) optimizing the binocular viewing system(2),
- the distance of the mean plane of rendering (42) being processed by the software (200) optimizing the binocular viewing system (2) so that it is equal to the display distance (22),

the said output parameters from such optimization software (200, 300, 400) being adapted to the interpupillary distance(11) of the said wearer so that the said wearer views the informative content (3) via the binocular viewing system (2) under conditions best adapted to his/her physiology.

**2.** The device according to claim 1, **characterized in that** the horizontal parallax is less than 1.2° in absolute value.

**3.** The device according to any of claims 1 or 2 when the informative content (3) is virtual content (31a), **characterized in that** the position and orientation (13) of the wearer's head is an input parameter into the software (400) optimizing the display source (4), and **in that** the said virtual informative content (31a) and the said position and the said orientation (13) are processed by the said optimization software (400) so as to obtain a centre distance position and a sighting direction for the line of sight of the two virtual cameras.

**4.** The device according to any of claims 1 to 3 when the informative content (3) is real filmed or stereoscopically acquired content (31b) **characterized in that** the said binocular viewing system comprises screens (21) whose resolution is an input parameter into the software (300) optimizing the informative content (3), and **in that** the said resolution of the screens (21) and the said informative content (31b) are processed by the said optimization software (300) so as to obtain a resolution (34) of the images particular to the said informative content (31b) and equal to the resolution of the screens (21).

**5.** The device according to any of claims 1 to 4 when the informative content (3) is the virtual content (31a) or the real non-stereoscopic content (31c), **characterized in that** the interpupillary distance (11) of the wearer is an additional input parameter into the software (400) optimizing the display source (4).

**6.** The device according to any of the preceding claims, **characterized in that** the display distance (22) of the images is an additional input parameter into the software (400) optimizing the display source (4).

**7.** The device according to any of the preceding claims **characterized in that** the disparity card (32) of the images and the parameter of the spatial frequency content (35) are processed by the software (400) optimizing the display source (4) to obtain a filtered spatial frequency content (44) particular to the display source (4).

**8.** The device according to any of the preceding claims **characterized in that** ophthalmic correction (12) of the wearer is an additional input parameter into the software (200) optimizing the binocular viewing system (2), the output parameters from the said software (200) being adapted to the said ophthalmic correction (12).

**9.** The device according to any of the preceding claims, **characterized in that** the said binocular viewing system comprises screens (21), and an additional output parameter from the software (200) optimizing the binocular viewing system (2) is the resolution of the screens (21).

**10.** The device according to claim 9 **characterized in that** the resolution of the screens (21) is an input parameter into the software (400) optimizing the display source (4).

**11.** The device according to claim 10, **characterized in that** the display resolution (41) is an additional output parameter from the software (400) optimizing the display source (4), and **in that** the resolution of the screens (21) can be processed by the software (400) optimizing the display source (4) to obtain a display resolution (41) of the said display source (4) equal to the resolution of the screens (21).

**12.** The device according to any of the preceding claims, **characterized in that** the binocular viewing system has a vertical parallax of less than 20°.

**13.** The device according to any of the preceding claims, **characterized in that** the display source (4) comprises the software (200, 300, 400) optimizing the binocular viewing system (2), the informative content (3) and the display source (4).

**14.** The device according to any of the preceding claims, **characterized in that** the said display source (4) is chosen from a computer, a game console and portable video reader.

**Patentansprüche**

**1.** Anzeigevorrichtung (1) zur stereoskopischen Visualisierung, die umfasst:

- ein binokulares Visualisierungssystem (2), und
- eine Anzeigequelle (4), die ein Apparat ist, der eine Lesefunktion eines informativen Inhalts (3) hat, der aus einem virtuellen Inhalt (31a), einem stereoskopisch erfassten oder gefilmten realen Inhalt (31b) und einem nicht stereoskopischen realen Inhalt (31c) ausgewählt ist, und/oder der Erzeugung von Videoanzeigesignalen für das binokulare Visualisierungssystem, **dadurch gekennzeichnet, dass** sie ferner elektronische Komponenten für die Umsetzung der Softwareprogramme (200, 300, 400) zur Optimierung des binokularen Visualisierungssystems (2), des informativen Inhalts (3) und der Anzeigequelle (4) umfasst, wobei die Optimierungs-Softwareprogramme gemeinsam eine Verwaltungsschleife der folgenden Parameter bilden:
- der Pupillendistanz (11) eines Trägers, die ein Eingangsparameter der Softwareprogramme (200, 300) zur Optimierung des binokularen Visualisierungssystems (2) und des informativen Inhalts (3) ist,
- der Anzeigedistanz (22) der Bilder, die ein Ausgangsparameter der Software (200) zur Optimierung des binokularen Visualisierungssystems (2) ist und die ein Eingangsparameter der Software (300) zur Optimierung des informativen Inhalts (3) ist, wobei der Parameter (22) und die Pupillendistanz (11) von der Software (200) zur Optimierung des binokularen Systems (2) derart verarbeitet werden, dass eine horizontale Parallaxe von weniger als 1,5° als absoluter Wert garantiert wird,

- des virtuellen informativen Inhalts (31a), des stereoskopisch erfassten realen oder gefilmten informativen Inhalts (31b), des nicht stereoskopischen realen oder gefilmten informativen Inhalts (31c), der Tiefenmappe der Bilder (32) und der Inhalt in Raumfrequenzen (35) der Bilder, die Ausgangsparameter der Software (300) zur Optimierung des informativen Inhalts (3) sind und die Eingangsparameter der Software (400) zur Optimierung der Anzeigequelle (4) sind, wobei der stereoskopisch erfasste oder gefilmte reale informative Inhalt (31b), die Pupillendistanz (11) des Trägers und die Anzeigedistanz (22) der Bilder von der Software (300) zur Optimierung des informativen Inhalts (3) verarbeitet werden, um den Winkel (33) zwischen den zwei virtuellen Kameras zu bestimmen, der dem gefilmten oder stereoskopisch erfassten Inhalt (31b) entspricht,

- der Distanz der mittleren Wiedergabeebene (42) und der Distanz zwischen den Kameras (43), die Ausgangsparameter der Software (400) zur Optimierung der Anzeigequelle (4) sind und die Eingangsparameter der Software (200) zur Optimierung des binokularen Visualisierungssystems (2) sind,

- wobei die Distanz der mittleren Wiedergabeebene (42) von der Software (200) zur Optimierung des binokularen Visualisierungssystems (2) derart verarbeitet wird, dass sie gleich der Anzeigedistanz (22) ist,

wobei die Ausgangsparameter dieser Optimierungs-Softwareprogramme (200, 300, 400) an die Pupillendistanz (11) des Trägers derart angepasst sind, dass der Träger den informativen Inhalt (3) über das binokulare Visualisierungssystem (2) unter Bedingungen visualisiert, die seiner Physiologie am besten angepasst sind.

**2.** Vorrichtung nach Anspruch 1, **dadurch gekennzeichnet, dass** die horizontale Parallaxe kleiner als 1,2° als absoluter Wert ist.

**3.** Vorrichtung nach einem der Ansprüche 1 oder 2, wenn der informative Inhalt (3) der virtuelle Inhalt (31a) ist, **dadurch gekennzeichnet, dass** die Position und die Ausrichtung (13) des Kopfes des Trägers ein Eingangsparameter der Software (400) zur Optimierung der Anzeigequelle (4) ist und dass der virtuelle informative Inhalt (31a) und die Position und die Ausrichtung (13) von der Optimierungssoftware (400) derart verarbeitet werden, um eine Position des Achsabstands und eine Aufnahmerichtung für die Aufnahmeachse der zwei virtuellen Kameras zu erhalten.

**4.** Vorrichtung nach einem der Ansprüche 1 bis 3, wenn der informative Inhalt (3) der der stereoskopisch erfasste oder gefilmte reale Inhalt (31b) ist, **dadurch gekennzeichnet, dass** das binokulare Visualisierungssystem Bildschirme (21) umfasst, deren Auflösung ein Eingangsparameter der Software (300) zur Optimierung des informativen Inhalts (3) ist, und dass die Auflösung der Bildschirme (21) und der informative Inhalt (31b) von der Optimierungssoftware (300) verarbeitet werden, um eine Auflösung (34) der Inhalte zu erhalten, die dem informativen Inhalt (31b) entspricht und gleich der Auflösung der Bildschirme (21) ist.

**5.** Vorrichtung nach einem der Ansprüche 1 bis 4, wenn der informative Inhalt (3) der virtuelle Inhalt (31a) oder der nicht stereoskopische reale Inhalt (31c) ist, **dadurch gekennzeichnet, dass** die Pupillendistanz (11) des Trägers ein zusätzlicher Eingangsparameter der Software (400) zur Optimierung der Anzeigequelle (4) ist.

**6.** Vorrichtung nach einem der vorangehenden Ansprüche, **dadurch gekennzeichnet, dass** die Anzeigedistanz (22) der Bilder ein zusätzlicher Eingangsparameter der Software (400) zur Optimierung der Anzeigequelle (4) ist.

**7.** Vorrichtung nach einem der vorangehenden Ansprüche, **dadurch gekennzeichnet, dass** die Tiefenmappe (32) der Bilder sowie der Parameter des Inhalts in räumlichen Frequenzen (35) von der Software (400) zur Optimierung der Anzeigequelle (4) verarbeitet werden, um einen gefilterten Inhalt in räumlichen Frequenzen (44) zu erhalten, der der Anzeigequelle (4) entspricht.

**8.** Vorrichtung nach einem der vorangehenden Ansprüche, **dadurch gekennzeichnet, dass** die ophtalmische Korrektur (12) des Trägers ein zusätzliches Eingangskriterium der Software (200) zur Optimierung des binokularen Visualisierungssystems (2) ist, wobei die Ausgangsparameter der Software (200) an die ophtalmische Korrektur (12) angepasst sind.

**9.** Vorrichtung nach einem der vorangehenden Ansprüche, **dadurch gekennzeichnet, dass** das binokulare Visualisierungssystem Bildschirme (21) umfasst und ein zusätzlicher Ausgangsparameter der Software (200) zur Optimierung des binokularen Visualisierungssystems (2) die Auflösung der Bildschirme (21) ist.

**10.** Vorrichtung nach Anspruch 9, **dadurch gekennzeichnet, dass** die Auflösung der Bildschirme (21) ein Eingangsparameter der Software (400) zur Optimierung der Anzeigequelle (4) ist.

**11.** Vorrichtung nach Anspruch 10, **dadurch gekennzeichnet, dass** die Anzeigeauflösung (41) ein zusätzlicher Ausgangsparameter der Software (400) zur Optimierung der Anzeigequelle (4) ist und dass die Auflösung der Bildschirme (21) von der Software (400) zur Optimierung der Anzeigequelle (4) verarbeitet werden kann, um eine Anzeigeauflösung (41) der Anzeigequelle (4) zu erhalten, die der Auflösung der Bildschirme (21) entspricht.

**12.** Vorrichtung nach einem der vorangehenden Ansprüche, **dadurch gekennzeichnet, dass** das binokulare Visualisierungssystem eine vertikale Parallaxe kleiner als 20' aufweist.

**13.** Vorrichtung nach einem der vorangehenden Ansprüche, **dadurch gekennzeichnet, dass** die Anzeigequelle (4) Softwareprogramme (200, 300, 400) zur Optimierung des binokularen Visualisierungssystems (2), des informativen Inhalts (3) und der Anzeigequelle (4) umfasst.

**14.** Vorrichtung nach einem der vorangehenden Ansprüche, **dadurch gekennzeichnet, dass** die Anzeigequelle (4) aus einem Rechner, einer Spielkonsole und einem tragbaren Videolesegerät ausgewählt ist.

**FIG. 1**

FIG. 2

## FIG. 3

## FIG. 4

porteur

200

400

300

# FIG. 5

**EP 2 070 338 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060072206 A
- WO 2004097462 A